(19) Europäisches Patentamt
European Patent Office
Office européen des brevets

(11) **EP 1 803 109 B1**

(12) **EUROPÄISCHE PATENTSCHRIFT**

(45) Veröffentlichungstag und Bekanntmachung des Hinweises auf die Patenterteilung:
**26.12.2007 Patentblatt 2007/52**

(51) Int Cl.:
*G08G 1/16* (2006.01)    *B60T 7/22* (2006.01)
*G01S 13/93* (2006.01)

(21) Anmeldenummer: **05800922.6**

(22) Anmeldetag: **12.10.2005**

(86) Internationale Anmeldenummer:
**PCT/DE2005/001827**

(87) Internationale Veröffentlichungsnummer:
**WO 2006/042512 (27.04.2006 Gazette 2006/17)**

(54) **VERFAHREN ZUR BESTIMMUNG RELEVANTER OBJEKTE**

METHOD FOR DETERMINING RELEVANT OBJECTS

PROCEDE POUR DETECTER DES OBJETS

(84) Benannte Vertragsstaaten:
**DE FR**

(30) Priorität: **20.10.2004 DE 102004051212**
**17.09.2005 DE 102005044561**

(43) Veröffentlichungstag der Anmeldung:
**04.07.2007 Patentblatt 2007/27**

(73) Patentinhaber: **ADC Automotive Distance Control Systems GmbH**
**88131 Lindau (DE)**

(72) Erfinder:
• **BEUSCHEL, Michael**
**85134 Stammham (DE)**
• **STEINER, Werner**
**86529 Schrobenhausen (DE)**

(74) Vertreter: **Büchner, Jörg**
**Conti Temic microelectronic GmbH**
**Sieboldstr. 19**
**90411 Nürnberg (DE)**

(56) Entgegenhaltungen:
**EP-A- 1 107 211        DE-A1- 10 309 943**
**US-A1- 2004 193 374**

EP 1 803 109 B1

**Beschreibung**

Die Erfindung bezieht sich auf ein Verfahren und eine Vorrichtung zur Bestimmung relevanter Objekte im Nahbereich eines Kraftfahrzeugs.

Ein wichtiger Bestandteil von Fahrerassistenzsystemen mit Sicherheits- oder Komfortfunktion ist eine Kollisionswarnfunktion. Eine solche Warnvorrichtung wird in WO 2005055171 dargestellt. Es wird eine Kollisionswahrscheinlichkeit berechnet unter der Annahme, dass ein vorausfahrendes Fahrzeug spontan verzögert. Dabei wird nicht berücksichtigt, dass der Fahrer einen Zusammenstoß in vielen Fällen durch ein Ausweichmanöver verhindern kann, oder der Fahrer einen Überholvorgang plant. In diesem Fall wird von dem beschriebenen System ein Fehlalarm ausgegeben. DE 10356309 beschreibt ebenfalls eine Kollisionswarnvorrichtung. Dazu werden alle möglichen Trajektorien des eigenen Fahrzeugs und alle möglichen Trajektorien aller detektierten Objekte ausgewertet. Dies erfordert viel Rechenleistung und aufwändige Sensoren mit großer Reichweite zur Bestimmung der Objekttrajektorien. Dokument US 2004/0193374 beschreibt eine Methode zur Kollisionsvermeidung mittels Steuerung von Lenkung und Bremse.

Es ist eine Aufgabe der hier vorliegenden Erfindung, Objekte, mit denen eine Kollision mit hoher Wahrscheinlichkeit eintritt, sicher, einfach und kostengünstig zu erkennen.

Die Aufgabe wird erfinderisch gemäß den unabhängigen Patentansprüchen gelöst. Die abhängigen Unteransprüche zeigen vorteilhafte Ausführungsformen und Weiterentwicklungen der Erfindung auf.

Es wird ein Verfahren zur Bestimmung relevanter Objekte im Nahbereich eines Kraftfahrzeugs mit einem Umgebungserfassungssensor angegeben. Dazu ist keine Berechnung des voraussichtlichen Bewegungsverlaufs der Objekte notwendig, wie es im Stand der Technik beschrieben wird. Da die Bestimmung relevanter Objekte im Nahbereich erfolgt, ist z. B. eine maximale Reichweite des Umgebungserfassungssensors von 8 m bis 15 m ausreichend. Ein Nahbereichssensor ist wesentlich kostengünstiger als z. B. Sensoren für Fahrerassistenzsysteme, deren Reichweiten ca. 150 m bis 200 m betragen. In dem erfindungsgemäßen Verfahren werden nur Objekte als relevant klassifiziert, mit denen trotz einer durchschnittlichen Fahrerreaktion wie ein Ausweichmanöver und einen Bremsvorgang eine Kollision mit großer Wahrscheinlichkeit eintritt. Dazu wird die Kollisionswahrscheinlichkeit in Abhängigkeit von zumindest zwei aus Fahrzeug- und Umgebungsdaten berechneten kollisionsrelevanten Werten bestimmt. In die Berechnung der kollisionsrelevanten Werte gehen z. B. die Fahrzeuggeschwindigkeit, die Relativgeschwindigkeit zum Objekt und eine Kurvenfahrt ein. Ein erster kollisionsrelevanter Wert charakterisiert ein zukünftiges oder ein bereits eingeleitetes Ausweichmanöver, das ein durchschnittlicher Fahrer ausführen würde, wenn sich z. B. ein Hindernis auf der Fahrspur befindet. Ein zweiter kollisionsrelevanter Wert beschreibt einen Abbremsvorgang, den ein durchschnittlicher Fahrer z. B. zur Kollisionsvermeidung ausführt.

Jeder der zumindest zwei Werte durch eine obere oder untere Schwelle begrenzt ist, die den Beginn eines kritischen Bereichs anzeigt. Es wird eine Aktivierung der Bremsmittel ohne vorherige Warnung des Fahrers eingeleitet, wenn sich der erste und/oder der zweite kollisionsrelevante Wert in einem kritischen Bereich bewegt.

Dieses Vorgehen liegt in der geringen Zeitspanne begründet, die bei einer *Nahbereichsüberwachung* zwischen der Erkennung einer kritischen langsamen Fahrsituation und dem Ergreifen einer notwendigen Gegenmaßnahme verstreichen darf. Es wird auf eine Warnung des Fahrers verzichtet und direkt eine Gegenmaßnahme, das autonome Bremsen des Fahrzeugs, angesteuert. Diese Ansteuerung kann von Verhaltensmustern des Fahrers abhängig gemacht werden und stets vom Fahrer mit eindeutigen Reaktionen, z.B. Aktivierung des Gaspedals, überstimmt werden. Die Funktion dieses Vorgehens ist auf niedrige Fehlalarmrate ausgelegt.

In einer bevorzugten Ausführungsform gibt der erste kollisionsrelevante Wert x den Abstand zwischen Objekt und Fahrzeug an. Der zugehörige Schwellwert, der relevante Abstand (x_rel), beschreibt genau den Abstand, indem ein Objekt mit einem durchschnittlichen Ausweichmanöver umfahren werden kann. Der relevante Abstand (x_rel) wird bei Geradeausfahrt aus dem Schnittpunkt des äußeren Erfassungsbereichs des Sensors und maximal möglichen Trajektorienänderung bestimmt. Die maximal mögliche Trajektorienänderung wird in Abhängigkeit von der Fahrzeuggeschwindigkeit (v_car) und einer Querbeschleunigung berechnet.

Insbesondere während einer Kurvenfahrt des Fahrzeugs wird der relevante Abstand (x_rel) als Funktion des Lenkwinkels festgelegt, um die Anzahl von Fehlalarmen zu reduzieren. Die Idee zur Festlegung des relevanten Abstands (x_rel) besteht darin, dass ausgehend vom momentanen Lenkwinkel eine gewisse zukünftige Änderung der Lenkrichtung in beide Richtungen innerhalb einer bestimmten Zeit angenommen wird. Dabei wird wiederum die maximal mögliche Trajektorienänderung wie oben beschrieben bestimmt.

In einer besonderen Ausgestaltung der Erfindung ist ein Umgebungserfassungssensor mit einer räumlichen Auflösung, d: h. mit mehreren Empfangskanälen vorgesehen. In diesem Fall wird der relevante Abstand (x_rel) für jedes Raumsegment bestimmt.

In einer bevorzugten Ausgestaltung wird die Ausdehnung eines Objekts zur Beurteilung des relevanten Abstand (x_rel) hinzugezogen. Ein ausgedehntes Objekt wird in mehreren oder allen Erfassungsbereichen des Sensors bei etwa gleichem Abstand detektiert. In diesem Fall ist ein Ausweichen wenig wahrscheinlich. Daher wird dann ein korrigierter größerer relevanter Abstand vorgesehen.

In einer besonderen Ausgestaltung der Erfindung gibt der zweite Wert eine Fahrverzögerung a an, die notwendig ist, um nicht auf ein Objekt aufzufahren, der zugehörige Schwellwert ist die relevante Verzögerung (a_rel). Diese gibt die maximale Verzögerung an, die ein durchschnittlicher Fahrer in üblichen Verkehrssituationen einleiten würde.

Insbesondere wird für die relevante Verzögerung (a_rel) ein fester Wert zwischen 0,2 g und 0,4 g gewählt. Ist zur Kollisionsvermeidung mit einem Objekt eine Fahrverzögerung größer als die relevante Verzögerung (a_rel) notwendig, liegt eine kritische Situation vor. In einer besonderen Ausführungsform der Erfindung ist die relevante Verzögerung (a_rel) ein fester Wert zwischen 0.25 g und 0.35 g. Die bei einem Bremseingriff zur Kollisionsvermeidung tatsächlich angeforderte Verzögerung kann von der relevanten Verzögerung, die lediglich als Schwellwert dient, abweichen.

In einer besonderen Ausgestaltung der Erfindung wird die maximale Stärke eines Bremseingriffs zur Kollisionsvermeidung mit der Fahrzeuggeschwindigkeit skaliert. Damit kann der Eingriff z. B. zwischen 40 und 60 km/h von 0.3 g auf 0 g reduziert werden. Ebenso kann der Eingriff bei Stillstand des Fahrzeugs ausgeblendet werden.

Insbesondere wird das Verfahren nur in einem vorgegebenen Bereich der Fahrzeuggeschwindigkeit bzw. Relativgeschwindigkeit zwischen Fahrzeug und Objekt durchgeführt wird. Der vorgegebene Bereich ist mit dem Erfassungsbereich des Sensors korreliert. Mit einer Relativgeschwindigkeit $\Delta\mathbf{v}$ von 25 km/h, einer relevanten Verzögerung $\mathbf{a}$\_rel von 0.3 g und einer Aktivierungszeit der Bremse $\Delta\mathbf{t}$\_b von 400 ms ergibt sich der relevante Abstand $\mathbf{x}$\_rel zu

$$x\_rel = \Delta\mathbf{v}^2 / (2 * a\_rel) + \Delta\mathbf{v} * \Delta\mathbf{t}\_b = 11\ m$$

In einer besonderen Ausführungsform der Erfindung wird bei Rückwärtsfahrt des Fahrzeugs das Verfahren nicht durchgeführt.

In einer speziellen Ausführungsform der Erfindung ist der Erfassungsbereich des Sensors im Wesentlichen kleiner als 15 m. Dies entspricht in etwa der Reichweite von Pre-Crash-Sensoren. Eine multifunktionale Nutzung des vorgesehenen Umgebungserfassungssensors ist somit für verschiedene Sicherheitsfunktionen vorgesehen und aus Gründen der Kostenersparnis vorteilhaft.

Zudem wird eine Vorrichtung mit einem Umgebungserfassungssensor, und einer Steuereinheit mit einer hinterlegten Programmierung zur Durchführung eines wie oben beschriebenen Verfahrens vorgestellt.

Die Erfindung wird nachfolgend anhand von Ausführungsbeispielen und 5 Abbildungen näher beschrieben.

Fig. 1: Bestimmung des relevanten Abstands $\mathbf{x}$\_rel (Ausweichmanöver)
Fig. 2: Bestimmung der relevanten Fahrzeugverzögerung $\mathbf{a}$\_rel
Fig. 3: Relevanter Abstand über Radius bei Kurvenfahrt
Fig. 4 oben: Relevanter Abstand $\mathbf{x}$\_rel in Abhängigkeit von der Fahrzeuggeschwindigkeit für stehende ausgedehnte und schmale Objekte

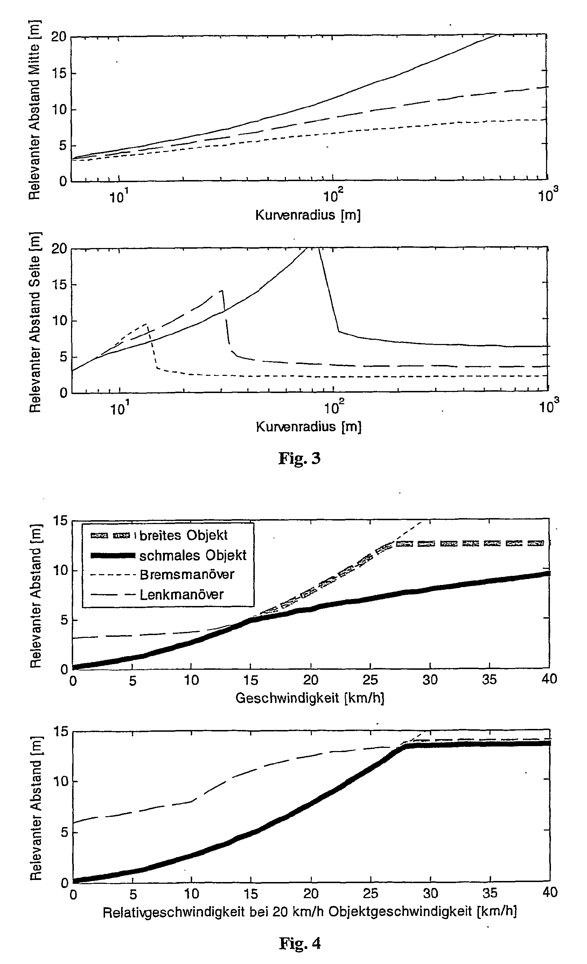

Fig. 4 unten: Relevanter Abstand $\mathbf{x}$\_rel in Abhängigkeit von der Relativgeschwindigkeit für bewegte ausgedehnte und schmale Objekte.

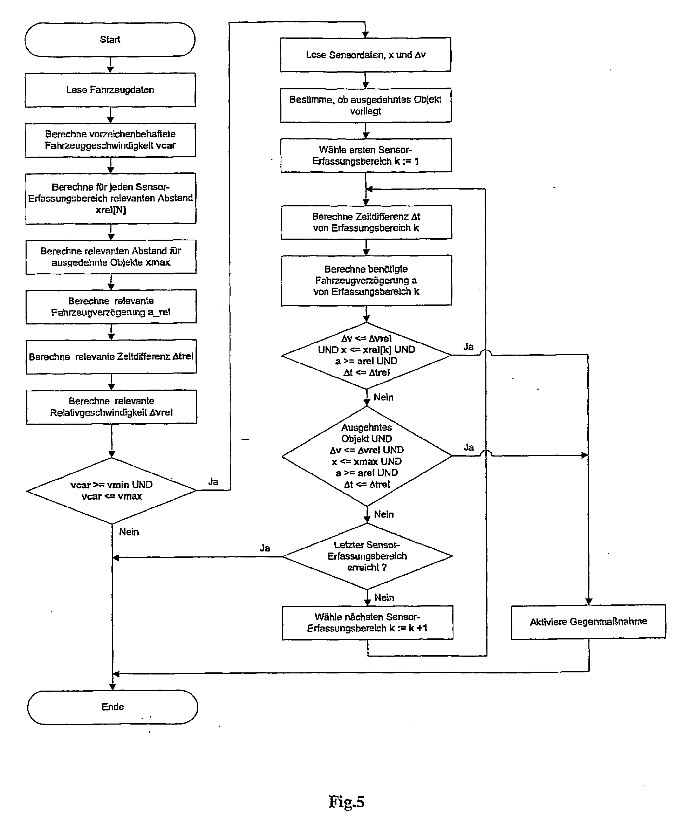

Fig. 5: Blockschaltbild des Verfahrens

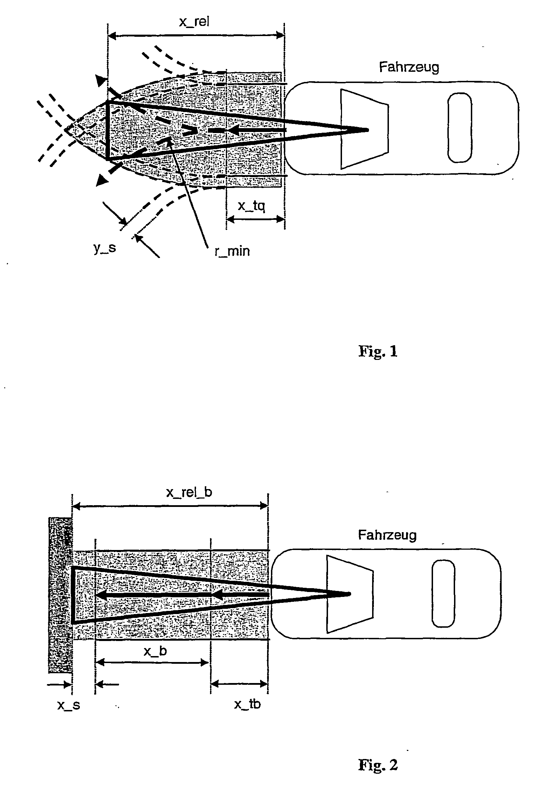

In Figur 1 ist die Bestimmung des relevanten Abstands x_rel schematisch dargestellt. Der relevante Abstand x_rel wird in Abhängigkeit von der vorzeichenbehafteten Eigengeschwindigkeit $\mathbf{v}$\_car des Fahrzeugs bestimmt, wobei eine Rückwärtsfahrt mit einem negativen Vorzeichen versehen ist. Objekte die einen geringeren Abstand als den relevanten Abstand x_rel zum Fahrzeug aufweisen, können mit einem typischen Lenkverhalten nicht mehr umfahren werden. Das typische Lenkverhalten wird im Wesentlichen durch eine maximale Querbeschleunigung $\mathbf{a}$\_ymax beschrieben. Zusätzlich wird vereinfachend eine Verzögerungszeit $\Delta\mathbf{t}$\_q bis zum Aufbau der jeweils möglichen Querbeschleunigung angenommen, sowie ein seitlicher Sicherheitsabstand $\mathbf{y}$\_s innerhalb dessen eine kritische Situation erkannt werden soll. Typische Werte für die drei genannten Größen sind z.B. $\mathbf{a}$\_ymax = 0.15 g, $\Delta\mathbf{t}$\_q = 200 ms und $\mathbf{y}$\_s = 0.2 m. Aus der Fahrzeuggeschwindigkeit $\mathbf{v}$\_car und der Querbeschleunigung bestimmt sich der minimale Radius $\mathbf{r}$\_min zu

$$r\_min = v\_car^2 / a\_ymax.$$

In Figur 1 ist ein Ausweichmanöver dargestellt. Es sind in der Draufsicht die Fahrzeugtrajektorien mit minimalen Radius $\mathbf{r}$\_min nach links und nach rechts mit unterbrochenen Linien dargestellt. Die Kurvenfahrt wird vereinfachend nach einer Verzögerungszeit der Querbeschleunigung $\Delta\mathbf{t}$\_q aufgenommen, die zum Aufbau der jeweils möglichen Querbeschleunigung benötigt wird. In dieser Zeit legt das Fahrzeug eine Distanz x_tq zurück. Zur Trajektorie des Fahrzeugs wird zudem ein Sicherheitsabstand $\mathbf{y}$\_s addiert. Die grau gefärbte Fläche 3 gibt einen relevanten Bereich an, in dem das Fahrzeug bei einem durchschnittlichen Lenkverhalten mit einem Objekt kollidieren würde. Der Erfassungsbereich des Sensors ist mit durchgezogenen Linien dargestellt. Der Schnittpunkt des äußeren Erfassungsbereiches des Sensors und der Fahrzeugtrajektorien mit dem minimalen Radius **r**_min gibt den relevanten Abstand **x**_rel an. In Fig. 1 ist die Bestimmung des relevanten Abstands **x**_rel für einen Sensor mit einem Aufnahmekanal dargestellt. In einer weiteren Ausführungsform, werden die, seitlichen Bereiche mit weiteren Aufnahmekanälen überwacht. Auch für diese Bereiche wird der relevanten Abstand **x**_rel wie beschrieben bestimmt.

Als weitere Fahrerreaktion wird eine Bremsung betrachtet. Dabei ist eine Aktivierungszeit der Bremse Δ**t**_b und ein Sicherheitsabstand **x**_s vorgesehen. Typische Werte für die Aktivierungszeit und den Sicherheitsabstand sind Δ**t**_b = 400 ms und **x**_s= 0.2 m. Der kalkulierte Bremsvorgang setzt sich aus drei Abschnitten zusammen. Zunächst wird eine Zeitspanne Δ**t**_b benötigt um die Bremsen zu aktivieren; während dieser Zeit wird die Strecke **x**_tb zurückgelegt. Zum tatsächlichen Bremsweg **x**_b wird ein Sicherheitsabstand **x**_s addiert. Die Summe der drei Distanzen **x**_tb, **x**_b und **x**_s ergibt die relevante Bremsdistanz **x**_rel_b. Die Verzögerung **a**, die bei einem durchschnittlichen Fahrerverhalten zur Vermeidung einer Kollision mit einem Objekt benötigt wird, kann z. B. mit der folgenden Relation berechnet werden:

$$\mathbf{a} = (\Delta\mathbf{v})^2 \, / \, 2 \, / \, (\mathrm{x} - \mathrm{x\_s} - \Delta\mathbf{v} * \Delta t\_b),$$

wobei x den Abstand zwischen Fahrzeug und Objekt und Δ**v** die Relativgeschwindigkeit angibt.

Im einfachsten Betriebsfall wird die Bremse dann aktiviert, wenn sowohl die benötigte Fahrverzögerung a eine Schwelle von ca. a_rel = 0.3 g übersteigt als auch der relevante Abstand x_rel unterschritten wird. Dieses Vorgehen reduziert die Anzahl der Fehlalarme sehr effizient. Es sind aber auch Fälle denkbar, in denen es sinnvoll ist, dass eine Abbremsung des Fahrzeugs ausgelöst wird, wenn nur einer der Werte x_rel oder a_rel sich in einem kritischen Bereich bewegt.

Die Sicherheitsabstände **x**_s und **y**_s können rechnerisch auch negative Werte erhalten, um die Ansprechempfindlichkeit des Verfahrens einzustellen oder um den Bremseingriff auf Kollisionsfolgenminderung zu begrenzen.

Für den Fall eines stationären Objekts lassen sich der relevante Abstand x_rel für ein Ausweichmanöver bzw. der relevante Bremsweg x_rel_b in einem Diagramm über die Fahrzeuggeschwindigkeit V_car auftragen, da die Fahrzeuggeschwindigkeit V_car hier der Relativgeschwindigkeit Δv entspricht. Das Ergebnis ist in Fig. 4 dargestellt. Es wird deutlich, dass eine Aktivierung der Bremsen bei einer Geschwindigkeit unter ca. 15 km/h in dieser Ausprägung der Erfindung allein durch den relevanten Bremsweg gesteuert wird. Darüber wird er durch den relevanten Abstandsbereich begrenzt; in diesem Bereich lässt sich damit eine Kollision abschwächen aber nicht vermeiden.

Befindet sich das Fahrzeug bereits in einer Kurve ergeben sich für einen Umgebungserfassungssensor mit einem zentralen und zwei seitlich dazu angeordneten Erfassungsbereichen die relevanten Abstände x_rel, die für den Fall des zentralen Erfassungskanals in Fig. 3 oben und für den Fall eines seitlichen Erfassungsbereichs in Fig. 3 unten über dem Kurvenradius aufgetragen sind. Die Auftragung wurde für verschiedene Öffnungswinkel des Sensors durchgeführt. Der relevante Abstand x_rel für den seitlichen Erfassungsbereich kann zusätzlich über den jeweils möglichen minimalen Kurvenradius auch von der Fahrzeuggeschwindigkeit v_car abhängen.

Unter bestimmten Bedingungen kann der Bereich für die Kollisionsvermeidung erweitert werden. Sinnvoll ist dies z.B. bei Erkennen eines breiten Objekts, d.h. in allen Erfassungsbereichen des Sensors wird ein Objekt mit etwa gleichem Abstand und etwa gleicher Geschwindigkeit detektiert. Da in diesem Fall ein Ausweichen praktisch nicht mehr möglich ist, kann auch bei Geschwindigkeiten über ca. 15 km/h weiter nur die Überschreitung der relevanten Verzögerung a_rel als Auslösekriterium dienen, in diesem Fall auch wenn der relevante Abstand x_rel überschritten wird.

Entsprechend des aktuellen Lenkwinkels können die Erfassungsbereiche des Umfelderfassungssensors zur Auswertung umgeschaltet werden. Vorteilhaft findet dabei eine Überblendung der relevanten Verzögerungen a_rel der einzelnen Erfassungsbereiche statt, die einsetzt, sobald der relevante Abstand eines zweiten Erfassungsbereichs größer als der relevante Abstand eines ersten Erfassungsbereichs ist.

Ein weiteres für einen Fehlalarm anfälliges Szenario ist das schnelle Zufahren auf eine Kurve, an deren Fahrbahnrand ein Objekt erkannt wird, mit anschließendem scharfen Abbremsen durch den Fahrer. Hier sollte das hier vorgestellte Verfahren keine ungewollte Aktivierung der Bremsen auslösen. Für diesen Fall eines stationären Objekts lassen sich der relative Abstand x_rel für ein Ausweichmanöver bzw. der relevante Bremsweg x_rel_b in einem Diagramm über die Fahrzeuggeschwindigkeit v_car auftragen, da die Fahrzeuggeschwindigkeit v_car hier der Relativgeschwindigkeit v_rel entspricht. Das Ergebnis ist in Fig. 4 oben dargestellt. Im normalen Betrieb, d.h. es wurde kein breites Objekt erkannt, verlaufen die Grenzen für den relevanten Abstand oberhalb 15 km/h niedriger als die für den relevanten Bremsweg bei 0.3 g, d.h. in der Phase schnellen Heranfahrens an die Kurve kommt der Fahrer nicht in den Auslösebereich der Bremsen ohne eine Kollision zu riskieren. Unter 15 km/h wird der relevante Abstand durch die relevante Verzögerung a_rel für das mittige Zufahren auf ein Hindernis bestimmt. Wenn der Fahrer ohne Kollision die Kurve durchfahren will, muss er noch den Wendekreis des Fahrzeugs berücksichtigen; dieser stellt dann einen zusätzlichen Sicherheitsabstand dar, der eine Auslösung der Bremsen unterdrückt. Somit löst das schnelle Zufahren auf eine Kurve keinen Fehlalarm aus. Statische und bewegte Objekte werden von dem vorgestellten Verfahren implizit berücksichtigt, da der relevante Abstand x_rel von der Fahrzeuggeschwindigkeit v_car abhängt, die relevante Verzögerung jedoch von der Relativgeschwindigkeit v_rel. Für statische Objekte ergeben sich damit die in Fig. 4 oben dargestellten Auslösekurven für schmale und breite Objekte. Bei einem schmalen Objekt kann die Kollision bis ca. 15 km/h, bei einem breiten Objekt bis ca. 27 km/h verhindert werden. Ist die Fahrzeuggeschwindigkeit größer als die Relativgeschwindigkeit (d.h. Objekt bewegt sich in dieselbe Richtung wie das Fahrzeug), erhöht sich der relevante Abstand entsprechend. Die untere Grafik zeigt die gleichen Kurven für ein Objekt, das sich mit 20 km/h bewegt. Damit wird die Kollision auch bei einem schmalen Objekt bis ca. 28 km/h verhindert.

Eine Ausführungsform des erfindungsgemäßen Verfahrens ist in einem Blockschaltbild in Fig. 5 dargestellt. Zunächst werden die benötigten Fahrzeugdaten eingelesen. Daraus wird die vorzeichenbehaftete Fahrzeuggeschwindigkeit v_car berechnet. Für jeden der N Erfassungsbereiche des Umgebungserfassungssensors wird der relevante Abstand x_rel berechnet. Zudem wird der relative Abstand für ein breites Objekt berechnet. Der Schwellwert der relevanten Beschleunigung wird bestimmt. Zudem wird der Schwellwert für die relevante Relativgeschwindigkeit $\Delta$v_rel berechnet. Der obere Schwellwert $\Delta$v_rel gibt an, ob eine Aktivierung der Bremse noch sinnvoll oder ob z. B. die Totzeit der Bremsanregelung großer als die verbleibende Zeit bis zur Kollision ist.

Als zusätzliches Kriterium kann ein weiterer Schwellwert, die relevante Zeitdifferenz bis zur Kollision **$\Delta$t_rel**, herangezogen werden. Diese berücksichtigt, dass der Fahrer innerhalb einer bestimmten Zeitspanne z. B. einen Spurwechsel vollziehen kann und daher vor Beginn dieser Zeitspanne kein Bremseingriff erfolgen sollte. Die Zeitdifferenz $\Delta$**t** ergibt sich aus Relativgeschwindigkeit $\Delta$**v** und Abstand **x** zu

$$\Delta t = x \, / \, \Delta v.$$

Die Schwellwerte sind entweder konstant oder eine Funktion der Fahrzeuggeschwindigkeit. Nachdem dieser erste Datensatz aus den Fahrzeugdaten berechnet wurde, wird zunächst überprüft, ob die Fahrzeuggeschwindigkeit in dem vorgegebenen Intervall liegt. Ist das Fahrzeug zu schnell, d .h. ein Nahbereichssensor kann nicht mehr sinnvoll zur Kollisionvermeidung eingesetzt werden, wird das Programm beendet. Gleiches gilt für eine Rückwärtsfahrt. Liegt die Fahrzeuggeschwindigkeit in dem vorgegebenen Intervall, werden die Sensordaten eingelesen, die angeben ob und in welchem Abstand x und mit welcher Relativgeschwindigkeit $\Delta$v sich ein Objekt im Erfassungsbereich des Sensors bewegt. Für einen ersten Sensor-Erfassungsbereich k wird die Zeitdifferenz $\Delta$t und die benötigte Fahrzeugverzögerung a berechnet. Ist die Relativgeschwindigkeit $\Delta$v zwischen Fahrzeug und Objekt kleiner oder gleich dem Schwellwert $\Delta$v_rel und der Abstand x zum Objekt kleiner oder gleich dem relevanten Abstand x_rel und ist die benötigte Fahrzeugverzögerung a größer oder gleich der relevanten Verzögerung a_rel und ist die Zeitdifferenz $\Delta$t kleiner oder gleich dem Schwellwert $\Delta$t_rel wird eine Gegenmaßnahme aktiviert. Sind eines oder mehrere der vier genannten Kriterien nicht erfüllt, wird geprüft, ob ein ausgedehntes Objekt vorliegt und die vier genannten Kriterien für ein ausgedehntes Objekt erfüllt sind. Wird die Prüfung mit "Ja" beendet, wird eine Gegenmaßnahme eingeleitet. Wird die Prüfung mit "Nein" beendet und sind alle Sensorbereiche ausgewertet worden, wird das Verfahren beendet. Sind noch nicht alle Sensorbereiche ausgewertet worden, wird der nächste Sensorbereich k+1 gewählt und es werden alle Schritte ab der Berechnung der Zeitdifferenz $\Delta$t erneut durchlaufen.

**Patentansprüche**

1. Verfahren zur Bestimmung relevanter Objekte im Nahbereich eines Kraftfahrzeugs mit einem Umgebungserfassungssensor, wobei aus den Daten des Umgebungserfassungssensors Abstand und Relativgeschwindigkeit zu einem Objekt und aus den Daten weiterer Fahrzeugsensoren der aktuelle Bewegungszustand des Fahrzeugs, insbesondere die Fahrzeuggeschwindigkeit und den Lenkwinkel, berechnet wird,
   wobei,
   nur Objekte als relevant klassifiziert werden, mit denen trotz einer durchschnittlichen Fahrerreaktion wie eines Ausweichmanövers und/oder eines Bremsvorgangs eine Kollision mit großer Wahrscheinlichkeit eintritt, wobei

   o zumindest zwei kollisionsrelevante Werte aus den Fahrzeug- und/oder Umgebungssensordaten berechnet werden,
   o wobei ein erster kollisionsrelevanter Wert ein zukünftiges oder ein bereits eingeleitetes Ausweichmanöver und ein zweiter kollisionsrelevanter Wert einen Abbremsvorgang zur Kollisionsvermeidung beschreibt, und
   o jeder der kollisionsrelevanten Werte durch einen oberen oder unteren Schwellwert begrenzt ist, der den Beginn eines kritischen Bereichs anzeigt, und

o die zugehörigen Schwellwerte nur aus den Fahrzeugsensordaten bestimmt werden, und, **dadurch gekennzeichnet, dass**

o *ein erster kollisionsrelevanter Wert den Abstand (x) zwischen Fahrzeug und Objekt angibt, und der zugehörige Schwellwert den relevanten Abstand (x_rel) angibt, bei dem ein Objekt durch ein durchschnittliches Ausweichmanöver umfahren werden kann, und der relevante Abstand (x_rel) bei Geradeausfahrt aus dem Schnittpunkt des äußeren Erfassungsbereichs des Sensors und Falzrzeugtrajektorie mit minimalem Radius und einer Verzögerungsgröße bestimmt wird, wobei der minimale Radius in Abhängigkeit von der Fahrzeuggeschwindigkeit (v_car) ermittelt wird und*

o eine Aktivierung der Bremsmittel eingeleitet wird, wenn sich zumindest einer der kollisionsrelevanten Werte im kritischen Bereich bewegt.

2. Verfahren nach Anspruch 1,
   **dadurch gekennzeichnet, dass**
   während einer Kurvenfahrt des Fahrzeugs der relevante Abstand (x_rel) als Funktion des Lenkwinkels festgelegt wird, wobei ausgehend vom momentanen Lenkwinkel eine gewisse zukünftige Änderung der Lenkrichtung in beide Richtungen innerhalb einer bestimmten Zeit angenommen wird.

3. Verfahren nach einem der vorherigen Ansprüche,
   **dadurch gekennzeichnet, dass**
   bei einer mehrkanaligen Umgebungserfassungssensor mit räumlicher Auflösung der relevante Abstand (x_rel) für jedes Raumsegment bestimmt wird.

4. Verfahren nach einem der vorherigen Ansprüche,
   **dadurch gekennzeichnet, dass**
   die Ausdehnung eines Objekts zur Beurteilung des relevanten Abstands hinzugezogen wird.

5. Verfahren nach einem der vorherigen Ansprüche,
   **dadurch gekennzeichnet, dass**
   ein zweiter kollisionsrelevanter Wert eine Bremsverzögerung (a) angibt, die benötigt wird, um nicht auf das Objekt aufzufahren, und der zugehörige Schwellwert durch eine relevante Verzögerung (a_rel) angegeben wird, wobei die relevante Verzögerung (a_rel) von der Relativgeschwindigkeit ($\Delta$v) und dem Abstand (x) zwischen Fahrzeug und Objekt und von zusätzlichen Sicherheitsparametern abhängt und die maximale Verzögerung angibt, die ein durchschnittlicher Fahrer einleiten würde.

6. Verfahren nach Anspruch 5,
   **dadurch gekennzeichnet, dass**
   die relevante Verzögerung (a_rel) einen Wert zwischen 0,2 g und 0,4 g einnimmt.

7. Verfahren nach Anspruch 5 oder 6,
   **dadurch gekennzeichnet, dass**
   die Stärke eines Bremseingriffs zur Kollisionsvermeidung und damit die relevante Verzögerung (a_rel) mit der Fahrzeuggeschwindigkeit skaliert wird.

8. Verfahren nach einem der vorherigen Ansprüche,
   **dadurch gekennzeichnet, dass**
   das Verfahren nur in einem vorgegebenen Bereich der Fahrzeuggeschwindigkeit durchgeführt wird, der mit dem Erfassungsbereich des Sensors korreliert ist.

9. Verfahren nach Anspruch 8,
   **dadurch gekennzeichnet, dass**
   bei Rückwärtsfahrt das Verfahren nicht durchgeführt wird.

10. Verfahren nach Anspruch 8,
    **dadurch gekennzeichnet, dass**
    der Erfassungsbereich des Sensors im Wesentlichen kleiner als 15 m ist.

11. Vorrichtung mit einem Umgebungserfassungssensor, einer Steuereinheit und Mittel zur Berücksichtigung des Umfangs des Umgebungserfassungssensors, mit einer hinterlegten Programmierung zur Durchführung eines Verfahrens nach einem der vorherigen Ansprüche.

**12.** Kraftfahrzeug mit Vorrichtung nach Anspruch 11.

## Claims

**1.** A method of determining relevant objects in the close range of a motor vehicle by means of an environment detection sensor, wherein the distance to and the relative velocity relative to an object are calculated from the data of the environment detection sensor, and the current state of motion of the vehicle, in particular the vehicle velocity and the steering angle, is calculated from the data of further vehicle sensors,
wherein only such objects are classified as being relevant with which a collision is very likely to occur in spite of an ordinary reaction of the driver, such as a swerving manoeuvre and/or a braking action, wherein

- at least two collision-relevant values are calculated from the vehicle sensor and/or environment sensor data,
- wherein a first collision-relevant value describes a future or an already initiated swerving manoeuvre and a second collision-relevant value describes a braking action for avoiding a collision, and
- each of the collision-relevant values is limited by an upper or lower threshold value that indicates the beginning of a critical range, and
- the associated threshold values are only determined from the vehicle sensor data, and **characterized in that**
- a first collision-relevant value indicates the distance (x) between the vehicle and the object, and the associated threshold value indicates the relevant distance (x_rel) at which it is possible to drive round an object by means of an ordinary swerving manoeuvre, and the relevant distance (x_rel) is determined, when the vehicle drives straight on, from the intersecting point of the outer detection range of the sensor and the vehicle trajectory with a minimum radius and a quantity of deceleration, wherein the minimum radius is determined depending on the vehicle velocity (v_car), and
- an activation of the braking means is initiated if at least one of the collision-relevant values is within the critical range.

**2.** A method according to Claim 1,
**characterized in that**
the relevant distance (x_rel) is set as a function of the steering angle during a cornering motion of the vehicle, wherein a certain future change in the steering direction in both directions within a particular period of time is assumed on the basis of the present steering angle.

**3.** A method according to any one of the preceding claims,
**characterized in that**
when using a multi-channel environment detection sensor with space resolution, the relevant distance (x_rel) is determined for each space segment.

**4.** A method according to any one of the preceding claims,
**characterized in that**
the dimension of an object is taken into consideration for assessing the relevant distance.

**5.** A method according to any one of the preceding claims,
**characterized in that**
a second collision-relevant value indicates a braking deceleration (a) that is necessary in order not to collide with the object, and the associated threshold value is indicated by a relevant deceleration (a_rel), wherein the relevant deceleration (a_rel) depends on the relative velocity (Δv) and the distance (x) between the vehicle and the object and on additional safety parameters and indicates the maximum deceleration that an ordinary driver would initiate.

**6.** A method according to Claim 5,
**characterized in that**
the relevant deceleration (a_rel) has a value of between 0.2 g and 0.4 g.

**7.** A method according to Claim 5 or 6,
**characterized in that**

the intensity of a braking intervention for avoiding a collision, and thus the relevant deceleration (a_rel), is scaled with the vehicle velocity.

8. A method according to any one of the preceding claims,
   **characterized in that**
   the method is only performed within a predetermined range of the vehicle velocity, said range being correlated with the detection range of the sensor.

9. A method according to Claim 8,
   **characterized in that**
   the method is not performed during a backward motion.

10. A method according to Claim 8,
    **characterized in that**
    the detection range of the sensor essentially is smaller than 15 m.

11. A device with an environment detection sensor, a control unit, and means for taking into consideration the size of the environment detection sensor with an installed programming for performing a method according to any one of the preceding claims.

12. A motor vehicle with a device according to Claim 11.

**Revendications**

1. Procédé de détermination d'objets pertinents à proximité d'un véhicule automobile au moyen d'un capteur de détection d'environnement, la distance et la vitesse relative par rapport à un objet étant calculés à partir des données du capteur de détection d'environnement, et l'état de déplacement actuel du véhicule, en particulier la vitesse du véhicule et l'angle de braquage étant calculés à partir des données d'autres capteurs du véhicule, où ne sont retenus comme pertinents que des objets avec lesquels une forte probabilité de collision est présentée, malgré une réaction moyenne du conducteur telle qu'une manoeuvre d'évitement et/ou de freinage, et où

   o au moins deux valeurs pertinentes quant à un risque de collision sont calculées à partir des données de capteurs de véhicule et/ou d'environnement,
   o une première valeur pertinente quant à un risque de collision décrit une manoeuvre d'évitement à venir où déjà commencée, et une deuxième valeur pertinente quant à un risque de collision décrit une manoeuvre de freinage pour éviter une collision, et où
   o chaque valeur pertinente quant à un risque de collision est limitée par une valeur limite inférieure ou supérieure indiquant le début d'une plage critique, et où
   o les valeurs limites correspondantes ne sont déterminées qu'à partir des données de capteurs du véhicule, et

   **caractérisé en ce que**

   o une première valeur pertinente quant à un risque de collision indique la distance (x) entre le véhicule et l'objet, **en ce que** la valeur limite correspondante indique la distance pertinente (x_rel) pour laquelle un objet est contournable par une manoeuvre d'évitement moyenne, et **en ce que** la distance pertinente (x_rel) est déterminée avec un rayon minimal et avec une grandeur de décélération en cas de trajectoire en ligne droite à partir du point d'intersection de la plage de détection extérieure du capteur avec la trajectoire du véhicule, ledit rayon minimal étant déterminé en fonction de la vitesse du véhicule (v_car), et
   o un actionnement des moyens de freinage est déclenché si au moins une des valeurs pertinentes quant à un risque de collision se meut dans la plage critique.

2. Procédé selon la revendication 1,
   **caractérisé en ce que**
   pendant une conduite en virage du véhicule, la distance pertinente (x_rel) est définie comme une fonction de l'angle de braquage, une certaine variation future de la direction dans les deux sens étant supposée pendant un temps défini.

3. Procédé selon l'une des revendications précédentes,

**caractérisé en ce qu'**
en cas de capteur de détection d'environnement à plusieurs canaux à définition spatiale, la distance pertinente (x_rel) est déterminée pour chaque segment spatial.

4. Procédé selon l'une des revendications précédentes,
**caractérisé en ce qu'**
il est recouru à l'extension d'un objet pour évaluer la distance pertinente.

5. Procédé selon l'une des revendications précédentes,
**caractérisé en ce qu'**
une deuxième valeur pertinente quant à un risque de collision indique une décélération de freinage (a), exigée pour ne pas percuter l'objet, et **en ce que** la valeur limite correspondante est indiquée par une décélération pertinente (a_rel), ladite décélération pertinente (a_rel) étant fonction de la vitesse relative ($\Delta$v) et de la distance (x) entre le véhicule et l'objet ainsi que de paramètres de sécurité complémentaires, et indiquant la décélération maximale qui serait commandée par un conducteur moyen.

6. Procédé selon la revendication 5,
**caractérisé en ce que**
la valeur de la décélération pertinente (a_rel) est comprise entre 0,2 g et 0,4 g.

7. Procédé selon la revendication 5 ou la revendication 6,
**caractérisé en ce que**
l'intensité d'une manoeuvre de freinage pour éviter une collision et donc la décélération pertinente (a_rel) sont exprimées à l'échelle de la vitesse du véhicule.

8. Procédé selon l'une des revendications précédentes,
**caractérisé en ce que**
ledit procédé n'est exécuté que dans une plage définie de vitesse du véhicule, corrélée à la plage de détection du capteur.

9. Procédé selon la revendication 8,
**caractérisé en ce que**
le procédé n'est pas exécuté en cas de marche arrière.

10. Procédé selon la revendication 8,
**caractérisé en ce que**
la plage de détection du capteur est essentiellement inférieure à 15 m.

11. Dispositif comprenant un capteur de détection d'environnement, une unité de commande et des moyens de prise en compte de l'étendue du capteur de détection d'environnement, avec un programme mémorisé pour l'exécution d'un procédé selon l'une des revendications précédentes.

12. Véhicule automobile comportant un dispositif selon la revendication 11.

x_rel

Fahrzeug

x_tq

y_s

r_min

**Fig. 1**

x_rel_b

Fahrzeug

x_b

x_s

x_tb

**Fig. 2**

**Fig. 3**

**Fig. 4**

Start

Lese Fahrzeugdaten

Berechne vorzeichenbehaftete
Fahrzeuggeschwindigkeit vcar

Berechne für jeden Sensor-
Erfassungsbereich relevanten Abstand
xrel[N]

Berechne relevanten Abstand für
ausgedehnte Objekte xmax

Berechne relevante
Fahrzeugverzögerung a_rel

Berechne relevante Zeitdifferenz Δtrel

Berechne relevante
Relativgeschwindigkeit Δvrel

vcar >= vmin UND
vcar <= vmax

Ja

Nein

Ende

Lese Sensordaten, x und Δv

Bestimme, ob ausgedehntes Objekt
vorliegt

Wähle ersten Sensor-
Erfassungsbereich k := 1

Berechne Zeitdifferenz Δt
von Erfassungsbereich k

Berechne benötigte
Fahrzeugverzögerung a
von Erfassungsbereich k

Δv <= Δvrel
UND x <= xrel[k] UND
a >= arel UND
Δt <= Δtrel

Ja

Nein

Ausgehntes
Objekt UND
Δv <= Δvrel UND
x <= xmax UND
a >= arel UND
Δt <= Δtrel

Ja

Nein

Letzter Sensor-
Erfassungsbereich
erreicht ?

Ja

Nein

Wähle nächsten Sensor-
Erfassungsbereich k := k +1

Aktiviere Gegenmaßnahme

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005055171 A
- DE 10356309
- US 20040193374 A